# FASCICULE DE BREVET EUROPEEN

(11) **EP 1 212 168 B1**
(45) Date de publication et mention de la délivrance du brevet: **07.05.2003**
(21) Numéro de dépôt: 00960800.1
(22) Date de dépôt: 06.09.2000
(51) Int. Cl.: B23Q 1/01

(54) **MACHINE-OUTIL D'USINAGE A DISPOSITION JUDICIEUSE DES ELEMENTS DE STOCKAGE DE FLUIDES NECESSAIRES AUX DIFFERENTES SERVITUDES DE LADITE MACHINE-OUTIL**
WERKZEUGMASCHINE MIT VORRICHTUNGEN ZUR SORGFÄLTIGEN LAGERUNG VON FLÜSSIGKEITEN, DIE FÜR HILFSVORRICHTUNGEN DER MASCHINE NÖTIG SIND
MACHINE-TOOL WITH ADEQUATE ARRANGEMENT OF ELEMENTS STORING FLUIDS REQUIRED FOR VARIOUS OPERATIONS OF SAID MACHINE-TOOL

(30) Priorité: 10.09.1999 FR 9911791
(43) Date de publication de la demande: 12.06.2002
(73) Titulaire: Renault Automation Comau, 92365 Meudon La Forêt Cedex (FR)
(72) Inventeur: EFFORSAT, Hervé, F-81710 Saix (FR)
(74) Mandataire: Richebourg, Michel François
(86) Numéro de dépôt international: FR0002447
(87) Numéro de publication internationale: WO01019564

(56) Documents cités:
- EP-A- 0 358 852
- WO-A-97/46352
- DE-C- 698 430
- FR-A- 777 699
- FR-A- 1 238 130
- US-A- 4 610 440
- US-A- 5 439 431
- PATENT ABSTRACTS OF JAPAN vol. 009, no. 268 (M-424), 25 octobre 1985 (1985-10-25) & JP 60 114431 A (KOGYO GIJUTSUIN;OTHERS: 0J), 20 juin 1985 (1985-06-20)
- PATENT ABSTRACTS OF JAPAN vol. 1998, no. 14, 31 décembre 1998 (1998-12-31) & JP 10 249660 A (YAMAZAKI MAZAK CORP), 22 septembre 1998 (1998-09-22)

## Description

### DOMAINE D'APPLICATION DE L'INVENTION

La présente invention a trait aux adaptations permettant de mieux répartir des équipements dits "servitudes" qui, constituant l'environnement immédiat d'une machine-outil d'usinage à grande vitesse, sont indispensables à son fonctionnement.

### DESCRIPTION DE L'ART ANTÉRIEUR

Classiquement, une machine-outil d'usinage à grande vitesse comprend un poste d'usinage dans lequel évolue un outil dans les mouvements selon une pluralité d'axes sont mis en oeuvre par un poste d'entraînement, les différentes fonctionnalités de la machine-outil ainsi que les actionneurs la constituant requérant à l'arrière de celle-ci un ensemble de fonctions autonomes, comme par exemple :
- un groupe hydraulique,
- un groupe de conditionnement d'air,
- un surpresseur de liquide d'arrosage,
- un groupe de refroidissement,
- un groupe de graissage,
- un groupe d'épuration de l'air aspiré depuis la zone de coupe,
- une armoire électrique de puissance et de pilotage de la machine-outil,
- etc...

Classiquement, les équipements réalisant ces fonctions sont réalisés et achetés séparément, puis assemblés mécaniquement sur un châssis. Les raccordements pour les alimentations en fluide et électriques sont ensuite réalisées.

Parmi ces équipements, les groupes de refroidissement et hydraulique nécessitent et possèdent chacun un réservoir de liquide dit "bac", réalisé séparément pour les deux fonctions et rapporté ensuite sur le châssis-support de la machine-outil, fixés sur le châssis et supportant eux-mêmes les appareils nécessaires à l'exploitation du fluide qu'il stocke : pompes, raccords, filtres et tuyaux.

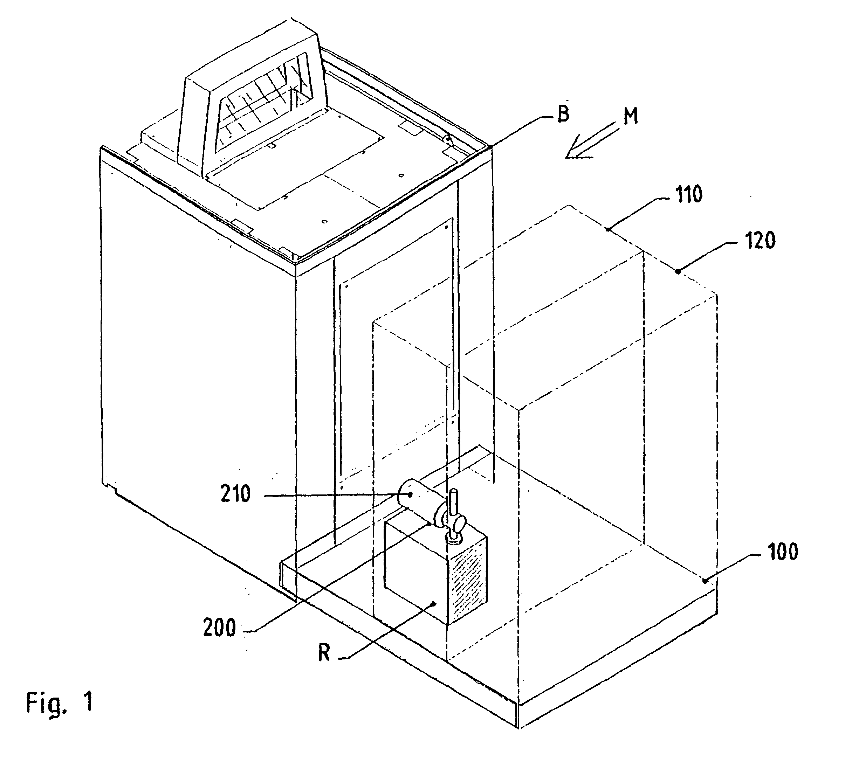

Comme illustré en figure 1, le bâti B d'une machine-outil M comprend sur sa partie arrière un châssis 100 supportant plusieurs armoires 110 et 120 susceptibles de contenir l'ensemble des servitudes nécessaires au bon fonctionnement de la machine-outil M. Ce châssis comprend donc des équipements 200 dont un est illustré qui comprennent un réservoir R rapporté associé à une pompe 210 ou tout actionneur susceptible d'exploiter le fluide stocké.

### BRÈVE DESCRIPTION DE L'INVENTION

La demanderesse, a constaté que le volume de tels équipements était particulièrement important et nuisait aux critères de compacité de la machine-outil. Partant de cet état de fait, la demanderesse a mené des recherches visant à améliorer la compacité des machines-outils au niveau du volume des servitudes de cette dernière.

Ces recherches ont abouti à la conception d'une machine-outil adoptant une disposition particulièrement avantageuse des réservoirs des équipements les nécessitant à l'intérieur du bâti de la machine-outil.

Selon la caractéristique principale de l'invention, la machine-outil d'usinage du type de celle nécessitant la présence d'équipements annexes exploitant des fluides stockés dans des réservoirs, lesdits équipements annexes étant liés au moyen d'un châssis au reste de la machine-outil (voir par exemple le document WO-A-9746352), est remarquable en ce que ledit chassis est realise de façon à créer dans son épaisseur une pluralité de compartiments étanches susceptibles de servir de réservoirs de fluide.

Cette caractéristique permet d'envisager l'exploitation de tout volume laissé libre à l'intérieur du bâti de façon à créer des réservoirs de stockage des fluides nécessaires au bon fonctionnement de la machine-outil.

Elle permet par exemple d'envisager, d'exploiter le volume laissé libre et défini par l'intérieur des tubes constituant le bâti d'une machine outil, en le rendant étanche de façon à créer un réservoir de stockage.

La conception d'une machine-outil comprenant dans les éléments constitutifs de son bâti, les réservoirs de stockage des fluides nécessaires à son bon fonctionnement permet d'envisager des machines-outils beaucoup plus compactes et dont les équipement périphériques seraient susceptibles d'être moins chers à l'achat puisque fournis sans réservoir.

Ce souci de compacité constitue un critère particulièrement important ayant des incidences aussi bien sur le coût du transport de la machine-outil que sur la surface nécessaire à son implantation.

En outre, l'utilisation des éléments du bâti pour la constitution des réservoirs a pour avantage de permettre un meilleur refroidissement des fluides notamment hydraulique car le fluide sera en contact avec toute la masse métallique de l'armature du bâti lequel bâti dispose d'une surface de diffusion de la chaleur excédentaire bien plus grande qu'un réservoir indépendant rapporté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'une machine-outil conforme à l'invention.

### BRÈVE DESCRIPTION DES DESSINS

La figure 1 est une vue en perspective arrière d'une machine-outil connue en arrière plan technologique,
La figure 2 est une vue en perspective arrière avec coupe partielle d'un mode de réalisation d'une machine-outil conforme à l'invention.

### DESCRIPTION DES MODES DE RÉALISATION PRÉFÉRÉS

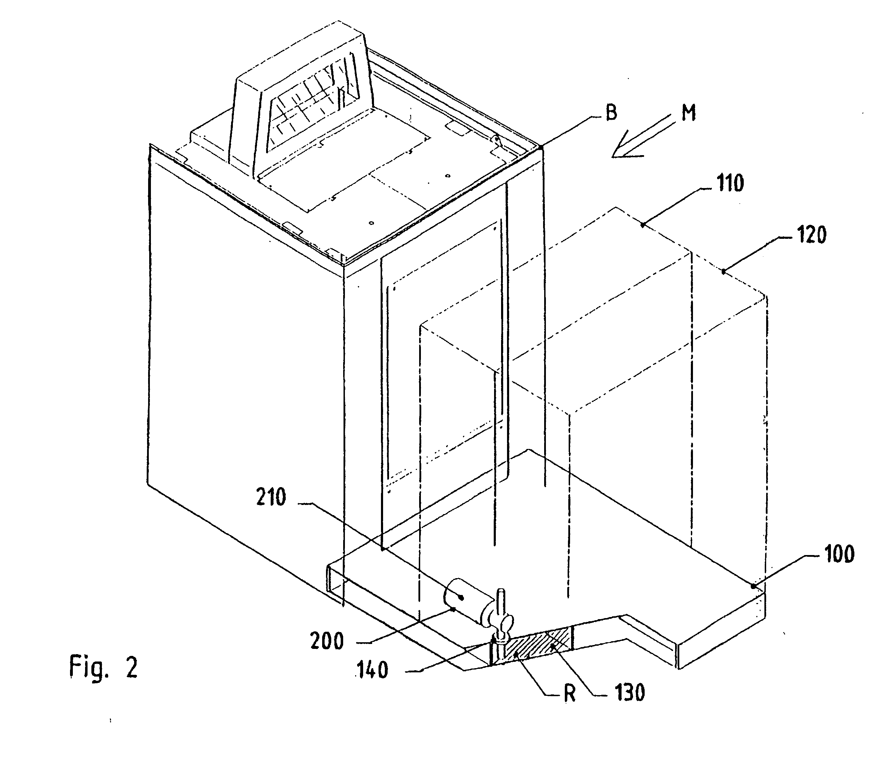

Telle qu'illustrés sur le dessin de la figure 2, la machine-outil d'usinage référencés M dans son ensemble est du type de celle nécessitant la présence d'équipements annexes 200 exploitant des fluides stockés dans des réservoirs R, lesdits équipements annexes 200 étant liés au moyen d'un châssis 100 au reste de la machine-outil M.

Cette machine-outil M est remarquable en ce que ledit châssis 100 est réalisé (comme hachuré) de façon à créer dans son épaisseur une pluralité de compartiments 130 étanches susceptibles de servir de réservoirs R auxdits fluides.

Ces caractéristiques sont parfaitement appliquables au bâti d'une machine-outil d'usinage à grande vitesse du type de celle assurant les mouvements sur au moins trois axes, d'un organe mobile au moyen de moteurs linéaires.

Comme illustré, ledit châssis 100 supporte des armoires 110 et 130 contenant lesdits équipements annexes 200 et adopte la forme d'un parallélépipède dont au moins une partie du volume est compartimentée de façon à former des réservoirs R étanches entre eux.

Ledit châssis 100 comprend sur sa partie supérieure et communiquant avec chaque réservoir R au moins une interface entrée/sortie 140 pour la connexion desdits réservoirs R avec lesdits équipements annexes rapportés 200 telle la pompe 210 illustrée.

Selon un mode de réalisation particulièrement avantageux ledit châssis 100 se décompose au moyen d'une paroi centrale en deux compartiments 130 définissant deux réservoirs R, l'un dédié au groupe hydraulique et l'autre au groupe de refroidissement. La juxtaposition des réservoirs R de fluides mis en oeuvre par ces équipements permet de créer un effet d'échange de chaleur qui assure aux deux fluides une stabilité thermique.

La comparaison de la figure 1 représentant l'art antérieur avec la figure 2 montre le gain de compacité réalisé sur un machine-outil M adoptant un mode de réalisation conforme à l'invention en exploitant le volume laissé libre à l'intérieur d'un châssis 100 existant comme réservoir R de stockage du ou des fluides nécessaires au bon fonctionnement de la machine-outil M. Il n'est donc plus nécessaire de rapporter un réservoir avec l'équipement annexe 200 ni de prévoir son encombrement.

On comprend que la machine-outil à disposition judicieuse des éléments de stockage des fluides nécessaires aux servitudes de ladite machine-outil, qui vient d'être ci-dessus décrite et représentée, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Ainsi tout tube susceptible d'être bouché à ses extrémités peut assurer la fonction de réservoir de stockage de fluides. De même, tout type de volume susceptible d'être compartimenté et fermé peut assurer cette fonction.

En outre, selon un mode de réalisation particulièrement avantageux mais non illustré, des réservoirs indépendants sont pré formés de façon à être intégrés dans l'épaisseur dudit châssis 100.

## Revendications

1. Machine-outil (M) d'usinage du type de celle nécessitant la présence d'équipements annexes (200) exploitant des fluides stockés dans des réservoirs (R), lesdits équipements annexes (200) étant liés au moyen d'un châssis (100) au reste de la machine-outil (M), **CARACTÉRISÉE PAR LE FAIT QUE** ledit châssis (100) est réalisé de façon à créer dans son épaisseur une pluralité de compartiments étanches (130) susceptibles de servir de réservoirs (R) de fluide.

2. Machine-outil (M) d'usinage selon la revendication 1, **CARACTÉRISÉE PAR LE FAIT QUE** ledit châssis (100) supporte des armoires (110 et 120) contenant lesdits équipements annexes (200) et adopte la forme d'un parallélépipède dont au moins une partie du volume est compartimentée de façon à former des réservoirs étanches (R) entre eux.

3. Machine-outil (M) selon la revendication 2, **CARACTÉRISÉE PAR LE FAIT QUE** ledit châssis (100) comprend sur sa partie supérieure et communiquant avec chaque réservoir au moins une interface entrée/sortie (140) pour la connexion desdits réservoirs (R) avec lesdits équipements annexes rapportés (200).

4. Machine-outil (M) selon la revendication 2, **CARACTÉRISÉE PAR LE FAIT QUE** des réservoirs (R) indépendants sont pré formés de façon à être intégrés dans l'épaisseur dudit châssis (100).

## Patentansprüche

1. Werkzeugmaschine (M) für die spanende Bearbeitung, die die Anwesenheit von zusätzlichen Ausrüstungsteilen (200) für den Einsatz von in Vorratsbehältern (R) gelagerten Fluiden erfordert, wobei die zusätzlichen Ausrüstungsteile (200) über ein Untergestell (100) mit der übrigen Werkzeugmaschine (M) verbunden sind, **dadurch gekennzeichnet, dass** das Untergestell (100) derart ausgestaltet ist, dass in seiner Dicke eine Vielzahl von abgedichteten Abteilen (130) ausgebildet ist, die als Vorratsbehälter (R) für Fluid dienen.

2. Werkzeugmaschine (M) für die spanende Bearbeitung nach Anspruch 1, **dadurch gekennzeichnet, dass** auf dem Untergestell (100) Schränke (110 und 120) angeordnet sind zur Aufnahme der zusätzlichen Ausrüstungsteile (200) und dass es die Gestalt eines Parallelepipeds aufweist, von dem wenigstens ein Teil in Abteile derart unterteilt ist, dass die gegeneinander abgedichteten Vorratsbehälter (R) gebildet werden.

3. Werkzeugmaschine (M) nach Anspruch 2, **dadurch gekennzeichnet, dass** das Untergestell (100) auf seiner Oberseite eine mit jedem Vorratsbehälter kommunizierende Einlass-/Auslassöffnung (140) aufweist für die Verbindung der Vorratsbehälter (R) mit den zusätzlichen Ausrüstungsteilen (200).

4. Werkzeugmaschine (M) nach Anspruch 2, **dadurch gekennzeichnet, dass** die unabhängigen Vorratsbehälter (R) derart vorgeformt sind, dass sie in die Dicke des Untergestells (100) einsetzbar sind.

## Claims

1. Machining machine tool (M) of the type that requires the presence of annex equipments (200) operating the fluids stored in the tanks (R), said annex equipments (200) being linked by means of a frame (100) to the remaining of the machine tool (M), **CHARACTERIZED IN THAT** said frame (100) is manufactured so as to create in its width a plurality of liquid proof compartments (130) capable of being used as tanks (R) for fluids.

2. Machining machine tool (M) according to claim 1, **CHARACTERIZED IN THAT** said frame (100) is carrying boxes (110 and 120) containing said annex equipments (200) and is adopting the shape of a parellelepiped, at least a part of the volume of which is partitioned so as to form tanks (R) that are liquid proof among themselves.

3. Machine tool (M) according to claim 2, **CHARACTERIZED IN THAT** said frame (100) is provided, on its upper part and communicating with each tank, with at least one interface input/output (140) for the connection of said tanks (R) with said built-up annex equipments (200).

4. Machine tool (M) according to claim 2, **CHARACTERIZED IN THAT** independent tanks (R) are pre-formed so as to be integrated into the width of said frame (100).
